# EUROPEAN PATENT SPECIFICATION

(11) **EP 3 775 575 B1**
(45) Date of publication and mention of the grant of the patent: **28.08.2024**
(21) Application number: 19721077.6
(22) Date of filing: 26.03.2019
(51) Int. Cl.: F15B 13/04, F16K 11/16, F16K 31/524

(54) **VALVE DEVICE**
VENTILEINRICHTUNG
DISPOSITIF DE VANNE

(30) Priority: 29.03.2018 IT 201800004097
(43) Date of publication of application: 17.02.2021
(73) Proprietor: Tech-Euroengineering S.r.l., 10070 San Carlo Canavese (Torino) (IT)
(72) Inventor: AZEGLIO POLITRO, Giovanni, 10070 Corio (Torino) (IT)
(74) Representative: Frontoni, Stefano
(86) International application number: PCT/IB2019/052425
(87) International publication number: WO 2019/186379

(56) References cited:
- US-A- 2 691 990
- US-A- 2 837 062
- US-A- 3 411 537
- US-A1- 2004 159 808

## Description

The present invention relates to a valve device, in particular a distribution device for control of an operating machine of a hydraulic system.

The valve device described herein has been specifically built for hydraulic systems that use as work fluid non-demineralised sea water.

For this specific application, there is the need to adopt a valve device that will be able to operate in a precise way, for prolonged times, and without any interruption, notwithstanding the impurities and aggressiveness that characterise sea water.

Valve devices known in the art are unable to operate in these conditions. US2837062A and US3411537A disclose prior art that may be of some interest as technical background.

The valve device described herein has been produced precisely in the perspective of obtaining the performance referred to above.

In particular, the valve device described herein is characterised by the features specified in Claim 1. The present invention moreover regards a hydraulic system according to Claim 5.

The claims set forth hereinafter form an integral part of the technical teaching provided herein.

Further characteristics and advantages of the invention will emerge clearly from the ensuing description with reference to the annexed drawings, which are provided purely by way of non-limiting example and in which:

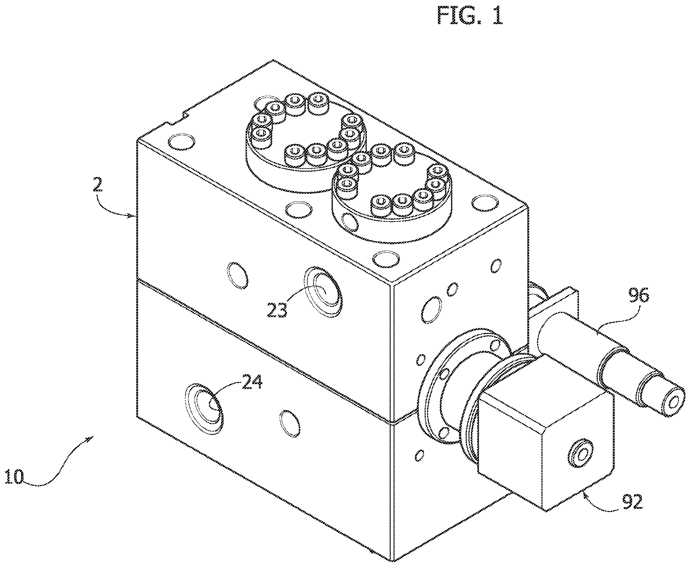

- Figure 1 illustrates an embodiment of the device described herein, according to an axonometric view;
- Figure 2A is a rear view of the device illustrated in Figure 1;
- Figure 2B is a front view of the device of Figure 1;
- Figure 2C is a lateral view, from the left-hand side, of the device illustrated in Figure 1;
- Figure 3A is a cross-sectional view of the device sectioned according to the plane III-III of Figure 2C;
- Figure 3B is a cross-sectional view of the device sectioned according to the plane IV-IV of Figure 3A;
- Figure 3C is a cross-sectional view of the device sectioned according to the plane V-V of Figure 3A;
- Figure 4 illustrates a component of the device described herein, according to a cross-sectional view; and
- Figure 5 is a schematic illustration of the device described herein within a hydraulic system for driving a hydraulic cylinder.

In the ensuing description, various specific details are illustrated aimed at enabling an in-depth understanding of the embodiments. The embodiments may be implemented without one or more of the specific details, or with other methods, components, or materials, etc. In other cases, known structures, materials, or operations are not illustrated or described in detail so that various aspects of the embodiment will not be obscured.

The references used herein are provided merely for convenience and hence do not define the sphere of protection or the scope of the embodiments.

As mentioned above, the valve device described herein is a distribution device designed for applications in hydraulic systems that use sea water as work fluid.

In the example illustrated, the valve device represented is a distributor for controlling a double-acting hydraulic cylinder 100. With reference to a device of a conventional type, for the same application this would be a 4/3 (four-way three-position) distributor.

As will emerge from what follows, the distributor described herein has, instead, a configuration altogether different from a 4/3 distributor of a conventional type.

It is in any case clear that the teachings that will be provided in what follows can be used for obtaining valve devices homologous - from the standpoint of operation - with respect to any conventional distributor.

In general, the device described herein is characterised in that it envisages a plurality of axial valves for control of the flow between the ports of the valve, the open/close elements of which are governed by cam means in a synchronised way.

The above configuration makes it possible to obtain a valve device that is provided with a structure and members that are particularly strong from the mechanical standpoint, and that is at the same time able to operate in a precise and reliable way.

In particular, the choice, as type of valve, of an axial valve and the provision of a plurality of axial valves that are structurally independent of one another, associated to the different mouths of the device, constitute aspects that are of determining importance to achieve the aforesaid results.

With reference now to the example represented in the figures, the valve device illustrated, designated as a whole by the reference number 10, comprises a block 2 on which an inlet 21, an outlet 22, and the plurality of mouths 23, 24, 25, and 26 are provided.

In the installed condition of the device, the inlet 21 is connected to the delivery branch of the hydraulic circuit, whereas the outlet 22 is connected to the discharge branch.

The mouths 23 and 24 are both connected to the inlet 21 via ducts 28 provided in the block 2; on the other hand, the mouths 25 and 26 are both connected to the outlet 22 via further ducts 32 provided in the block 2.

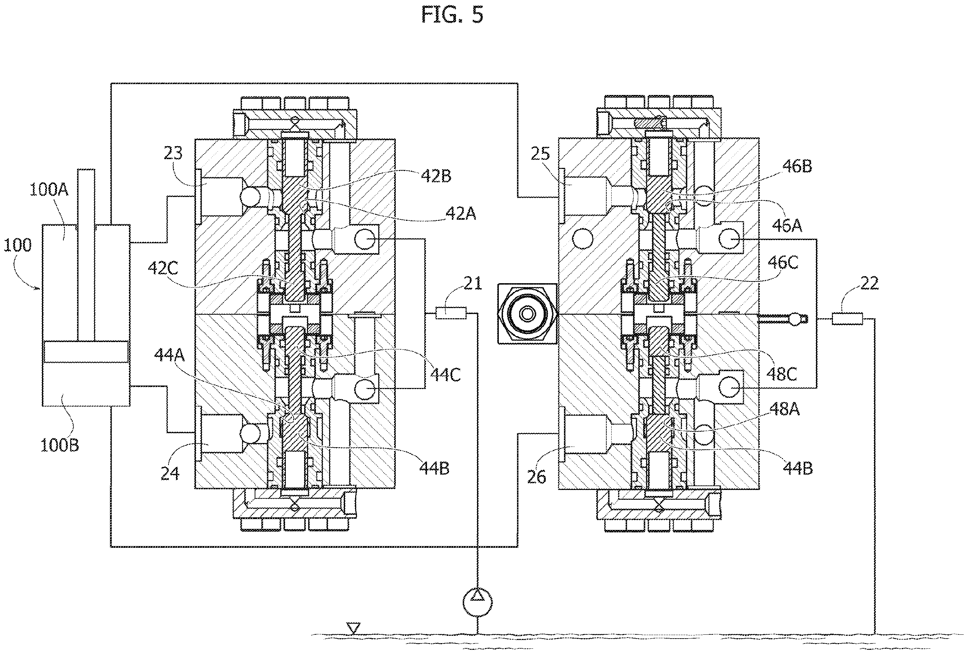

It should now be noted that the mouths 23 and 24 constitute two delivery mouths of the device, which, within the hydraulic system illustrated in Figure 5, are each connected to one of the two chambers 100a and 100b of the cylinder 100.

Likewise, the two mouths 25 and 26 both constitute mouths for return of the work fluid to the device 10, which, within the system illustrated in Figure 5, are also each connected to one of the two chambers 100a and 100b of the cylinder 100.

The device 10 comprises a first valve 42 and a second valve 44, which are provided for controlling communication, respectively, between the mouth 23 and the inlet 21 and between the mouth 24 and the inlet 21. Moreover, the device 10 comprises a third valve 46 and a fourth valve 48, which are provided for controlling communication, respectively, between the mouth 25 and the outlet 22 and between the mouth 26 and the outlet 22. The valves in question are valves of an axial type, i.e., provided with an open/close element mobile in a direction orthogonal to the section of passage defined by the valve seat.

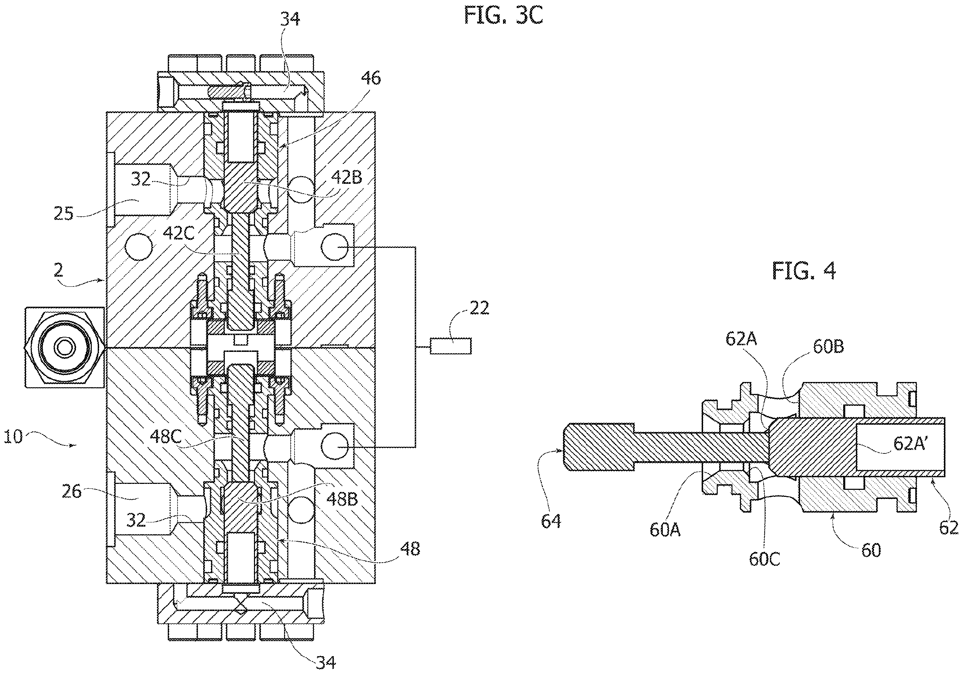

Figure 4 illustrates in detail one of such valves, according to a preferred embodiment.

This comprises an axially perforated valve body 60 and an open/close element 62 slidably mounted within the body 60. The body 60 identifies an axial port 60A and a series of radial ports 60B. In the space comprised between the axial port 60A and the radial ports 60B, provided on the valve body 60 is the conical valve seat 60C, aligned with the main axis of the valve body 60. The open/close element 62 has a corresponding conical portion designed to engage the valve seat 60C, in this condition closing communication between the ports 60A and 60B.

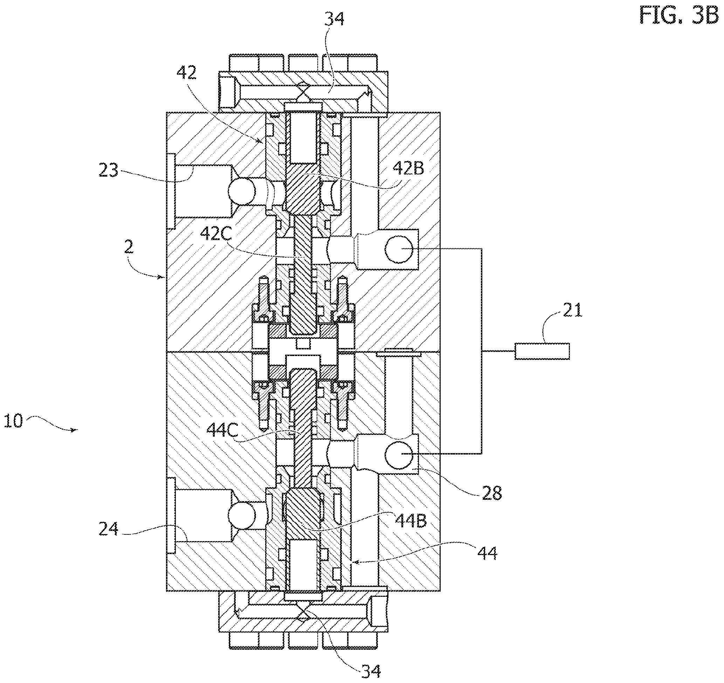

In various preferred embodiments, as in the one illustrated, the open/close element 62 has opposite active surfaces 62A and 62A' on which the work fluid comes to act on the side upstream of the valve and which are sized with respect to one another in such a way that the open/close element 62 is kept by the work fluid in the closed position. Visible in the cross-sectional views of Figures 3B and 3C are the ducts 34 that are designed to carry the work fluid to the surfaces 62A' of the open/close elements, which are located in the opposite position with respect to the axial port 60A of the valve body. The difference between the surfaces 62A and 62A' is in any case minimal, this in order to facilitate driving of the open/close elements 62, which will be described in what follows.

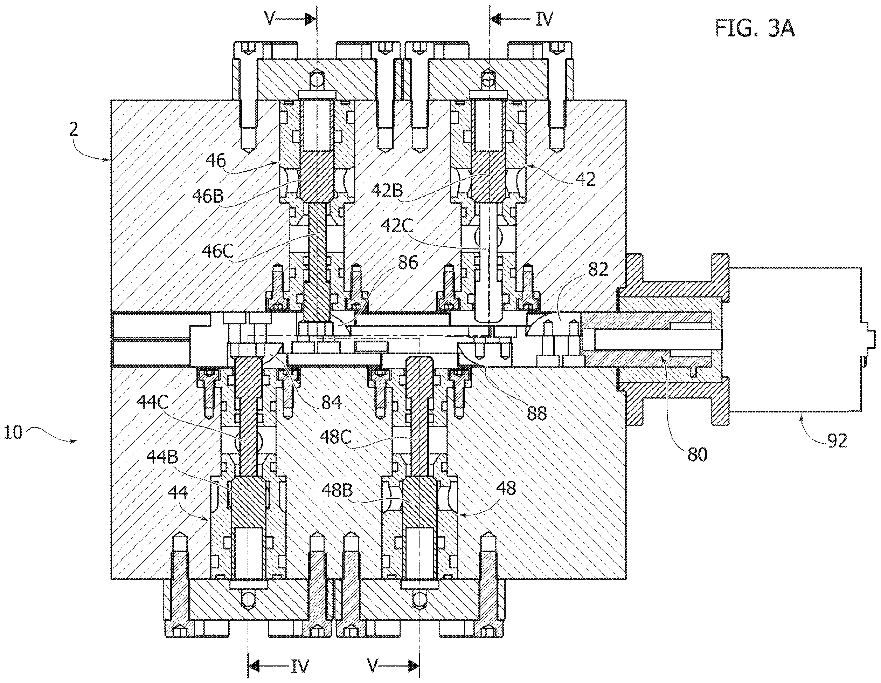

Incidentally, it should be noted that, for simplicity of representation, in Figures 3A-3C and 5, the open/close elements and the valve seats of the valves 42, 44, 46, and 48, are designated by the references 42A, 44A, 46A, 48A and the references 42B, 44B, 46B, 48B, respectively.

In view of the foregoing, it will be understood that the valves 42 and 44, like the valves 46 and 48, will operate in an alternating way on the basis of the command that is to be transmitted to the cylinder 100. On the other hand, the valves 42 and 48, on one side, and the valves 44 and 46, on the other side, will have to operate in a synchronised way, to enable driving of the cylinder 100.

For instance, with reference to Figure 5, for a command to the cylinder 100 designed to extract the stem, it will be necessary to drive the valves 42 and 48 simultaneously into the open position. For a command designed to retract the stem, it will instead be necessary to drive the two valves 44 and 46 simultaneously into the open position.

To carry out the driving actions referred to above, the device 10 comprises a driving member 80 provided with a series of cam surfaces 82, 84, 86, 88, which are designed to co-operate with respective tappet members 42C, 44C, 46C, and 48C arranged so as to engage with the open/close elements of the valves 42, 44, 46, 48. Preferably, the open/close elements 62 are pushed against the tappet members by elastic elements (not illustrated) housed in the cavities provided on the ends of the open/close elements opposite to the respective conical portions designed to engage the valve seats 60C. Preferably, the cam surfaces 82, 84, 86, 88 have a ramp profile.

The member 80 is driven in a movement of translation, by an actuator assembly 92, between a first position, in which the cam surfaces 82 and 88 drive the open/close elements of the valves 42 and 48 into the open position, via the tappet members of the open/close elements themselves, and a second position, in which the cam surfaces 84 and 86 drive the open/close elements of the valves 44 and 46 into the open position, once again via the tappet members carried by the open/close elements themselves.

Clearly, the cam surfaces 82, 84, 86, and 88 are set with respect to one another in such a way that, when the portions 82 and 88 or 84 and 86 govern the respective open/close elements, the other two surfaces remain, instead, inactive.

With reference to Figure 4, it will be noted that, preferably, each tappet member - designated in the figure by the reference 64 - is provided in the same body that defines the open/close element 62 itself.

In various preferred embodiments, as in the one illustrated, for the driving member 80 a third working position is moreover envisaged, which is intermediate between the two positions referred to above, where all the cam surfaces are inactive and the valves 42, 44, 46, 48 are all kept closed.

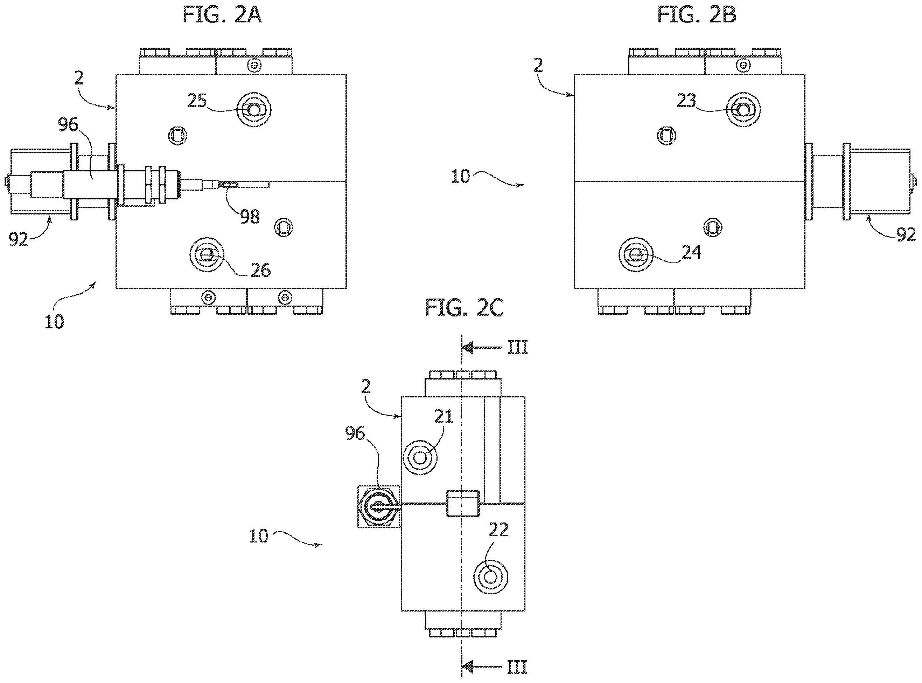

The actuator assembly 92, which is designed to drive the member 80, comprises a stepper motor, connected to which is a screw transmission member. In various preferred embodiments, as in the one illustrated, the device 10 further comprises a position sensor 96, for example a linear transducer, which is designed to measure the position of a control element 98, which is located outside the block 2 and is connected in a fixed way with respect to the driving member 80 (Figure 2A).

The control unit of the device may be configured for governing the actuator assembly 92 on the basis of the data coming from the position sensor 96 so as to ensure correct positioning of the driving member 80 in the various working positions, for any condition of the device and in a way constant in time.

This system enables precise control of the position of the member 80, which is able to follow with precise dynamics an analog reference, proportional to the desired position, coming from the control-system controller.

The control unit may moreover be provided with an enable input (in the absence of which it brings the driving member 80 into a central position, irrespective of the value of the analog input), and two further inputs for selection of the direction of movement.

The above architecture facilitates control of the device, which may also be operated directly by a proportional joystick or by a remote control, which typically supplies an analog signal and two direction signals.

The position of the member 80 may be made available on an analog output for the control-system controller or for diagnostic purposes. The control unit of the device may also be interfaced with telemonitoring/remote-diagnostics systems.

On the other hand, it will be noted that, thanks to the configuration described above, the valve device 10 is able to provide a condition of simultaneous closing both of the delivery passageways and of the return passageways, as a result of simultaneous closing of the valves 42 and 44, which are located on the delivery side, and of the valves 46 and 48, which are located on the return side. This condition provides safety in regard to possible malfunctioning of the hydraulic system.

Furthermore, the device described herein is provided for enabling a proportional opening of the passageways, thanks to the ramp cams, which bring about rising of the open/close elements 42B, 44B, 46B, 48B. This device is consequently able to carry out a precise and reliable control of the hydraulic machine referred to herein.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims.

## Claims

1. A valve device for distributing a work fluid to an operating machine of a hydraulic system, said device comprising:
- a valve block (2) having an inlet (21) and at least a first mouth (23) and a second mouth (24);
- a first valve seat (42A), defining a passageway designed to set said first mouth (23) in communication with said inlet (21), and a first open/close element (42B) that closes said first valve seat (42A);
- a second valve seat (44A), defining a passageway designed to set said second mouth (24) in communication with said inlet (21), and a second open/close element (44B) that closes said second valve seat (44A); and
- a driving member (80) governed by an actuator, mobile between a first position and a second position, where said driving member has a first cam surface (82) and a second cam surface (84), which are designed to be engaged, respectively, by a first tappet member (42C) connected to said first open/close element (42B) and by a second tappet member (44C) connected to said second open/close element (44B),
wherein said first and second cam surfaces (82, 84) are provided in such a way that, in said first position of said driving member (80), said first open/close element (42B) is driven into the open position by said first cam surface (82) via said first tappet member (42C) so as to set said first mouth (23) in communication with said inlet (21) and, in said second position, said second open/close element (44B) is driven into the open position by said second cam surface (84) via said second tappet member (44C) so as to set said second mouth (24) in communication with said inlet (21),
wherein said valve block (2) has:
- an outlet (22) and a third mouth (25) and a fourth mouth (26);
- a third valve seat (46A), defining a passageway designed to set said third mouth (25) in communication with said outlet (22), and a third open/close element (46B) that closes said third valve seat (46A); and
- a fourth valve seat (48A), defining a passageway designed to set said fourth mouth (26) in communication with said outlet (22), and a fourth open/close element (48B) that closes said fourth valve seat (48A), wherein said driving member (80) has a third cam surface (86) and a fourth cam surface (88), which are engaged, respectively, by a third tappet member (46C), connected to said third open/close element (46B), and by a fourth tappet member (48C), connected to said fourth open/close element (48B);
wherein said third and fourth cam surfaces (86, 88) are provided in such a way that, in said first position of said driving member (80), said fourth open/close element (48B) is driven into the open position by said fourth cam surface (88) via said fourth tappet member (48C) so as to set said fourth mouth (26) in communication with said outlet (22), and, in said second position, said third open/close element (46B) is driven into the open position by said third cam surface (86) via said third tappet member (46C) so as to set said third mouth (25) in communication with said outlet (22),
wherein the drive member (80) is driven in a movement of translation, by said actuator (92), between said first position and said second position,
wherein said first, second, third, and fourth cam surfaces (82, 84, 86, 88) are positioned on the drive member (80) with respect to one another in such a way that, in said first position of said driving member (80), said first and fourth open/close elements (42B, 48B) are driven into the open position by said first and fourth cam surfaces (82, 88) so as to set, simultaneously, said first mouth (23) in communication with said inlet (21) and said fourth mouth (26) in communication with said outlet (22), and, in said second position of said driving member (80), said second and third open/close elements (44B, 46B) are driven into the open position by said second and third cam surfaces (84, 86) so as to set, simultaneously, said second mouth (24) in communication with said inlet (21) and said third mouth (25) in communication with said outlet (22),
**characterised in that** for each valve seat (60C) and the corresponding open/close element (62), said open/close element is mobile in a direction orthogonal to the section of flow defined by said valve seat.

2. The device according to Claim 1, wherein said driving member (80) can be positioned in a third position, intermediate between said first and second positions, where said cam surfaces (82, 84, 86 88) are all inactive and said open/close elements (42B, 44B, 46B, 48B) are all in a closed position.

3. The device according to Claim 1, wherein said open/close element has opposite surfaces (62A, 62A'), designed to be subjected to the pressure of the work fluid on the side upstream of the valve seat, which are sized with respect to one another in such a way that, as a result of the pressure acting on said surfaces, said open/close element is normally kept in the closed position, in the absence of any action by said driving member.

4. The device according to any one of the preceding claims, wherein said cam surfaces (82, 84, 86, 88) have a ramp profile.

5. A hydraulic system comprising:
- a device for supplying a work fluid;
- an operating machine designed to operate with said work fluid, which comprises a first chamber (100A), or first passageway, and a second chamber (100B), or second passageway, which are designed, selectively and in a way alternating with one another, to receive or supply a flow of said work fluid; and
- a valve device according to any one of the preceding claims,
wherein said inlet (21) of said valve device (10) is connected to said supply device, and wherein said first and second mouths (23, 24) are connected to said first and second chambers (100A, 100B), respectively, and said third and fourth mouths (25 and 26) are connected to said first and second chambers (100A, 100B), respectively.

6. The hydraulic system according to Claim 5, wherein said supply device is designed to take the water from a stretch of natural water for use of said water as work fluid.

7. The system according to Claim 5 or Claim 6, wherein said outlet (22) of said device is set in communication with a drain provided for draining off said work fluid from said system.

## Patentansprüche

1. Ventileinrichtung zum Verteilen eines Arbeitsfluids an eine Arbeitsmaschine eines Hydrauliksystems, wobei die Einrichtung umfasst:
- einen Ventilblock (2) mit einem Einlass (21) und mindestens einer ersten Mündung (23) und einer zweiten Mündung (24);
- einen ersten Ventilsitz (42A), der einen Durchgang definiert, der dazu ausgelegt ist, die erste Mündung (23) in Verbindung mit dem Einlass (21) zu setzen, und ein erstes Öffnungs-/Schließelement (42B), das den ersten Ventilsitz (42A) schließt;
- einen zweiten Ventilsitz (44A), der einen Durchgang definiert, der dazu ausgelegt ist, die zweite Mündung (24) in Verbindung mit dem Einlass (21) zu setzen, und ein zweites Öffnungs-/Schließelement (44B), das den zweiten Ventilsitz (44A) schließt; und
- ein Antriebsglied (80), das durch einen Aktuator gesteuert wird und zwischen einer ersten Position und einer zweiten Position bewegbar ist, wobei das Antriebsglied eine erste Nockenfläche (82) und eine zweite Nockenfläche (84) aufweist, die dazu ausgelegt sind, mit einem ersten Stößelglied (42C), das mit dem ersten Öffnungs-/Schließelement (42B) verbunden ist, bzw. mit einem zweiten Stößelglied (44C), das mit dem zweiten Öffnungs-/Schließelement (44B) verbunden ist, in Eingriff zu kommen,
wobei die erste und die zweite Nockenfläche (82, 84) so vorgesehen sind, dass in der ersten Position des Antriebsglieds (80) das erste Öffnungs-/Schließelement (42B) durch die erste Nockenfläche (82) über das erste Stößelglied (42C) in die geöffnete Position getrieben wird, um die erste Mündung (23) in Verbindung mit dem Einlass (21) zu setzen, und in der zweiten Position das zweite Öffnungs-/Schließelement (44B) durch die zweite Nockenfläche (84) über das zweite Stößelglied (44C) in die geöffnete Position getrieben wird, um die zweite Öffnung (24) in Verbindung mit dem Einlass (21) zu setzen,
wobei der Ventilblock (2) aufweist:
- einen Auslass (22) und eine dritte Mündung (25) und eine vierte Mündung (26);
- einen dritten Ventilsitz (46A), der einen Durchgang definiert, der dazu ausgelegt ist, die dritte Mündung (25) mit dem Auslass (22) in Verbindung zu setzen, und ein drittes Öffnungs-/Schließelement (46B), das den dritten Ventilsitz (46A) schließt; und
- einen vierten Ventilsitz (48A), der einen Durchgang definiert, der dazu ausgelegt ist, die vierte Mündung (26) in Verbindung mit dem Auslass (22) zu setzen, und ein viertes Öffnungs-/Schließelement (48B), das den vierten Ventilsitz (48A) schließt,
wobei das Antriebsglied (80) eine dritte Nockenfläche (86) und eine vierte Nockenfläche (88) aufweist, die mit einem dritten Stößelglied (46C), das mit dem dritten Öffnungs-/Schließelement (46B) verbunden ist, beziehungsweise mit einem vierten Stößelglied (48C), das mit dem vierten Öffnungs-/Schließelement (48B) verbunden ist, in Eingriff stehen,
wobei die dritte und die vierte Nockenfläche (86, 88) so vorgesehen sind, dass in der ersten Position des Antriebsglieds (80) das vierte Öffnungs-/Schließelement (48B) durch die vierte Nockenfläche (88) über das vierte Stößelglied (48C) in die geöffnete Position getrieben wird, um die vierte Mündung (26) mit dem Auslass (22) in Verbindung zu setzen, und in der zweiten Position das dritte Öffnungs-/Schließelement (46B) durch die dritte Nockenfläche (86) über das dritte Stößelglied (46C) in die geöffnete Position getrieben wird, um die dritte Mündung (25) in Verbindung mit dem Auslass (22) zu setzen,
wobei das Antriebsglied (80) durch den Aktuator (92) in eine Translationsbewegung zwischen der ersten Position und der zweiten Position versetzt wird,
wobei die erste, die zweite, die dritte und die vierte Nockenfläche (82, 84, 86, 88) auf dem Antriebsglied (80) in Bezug zueinander so positioniert sind, dass in der ersten Position des Antriebsglieds (80) das erste und das vierte Öffnungs-/Schließelement (42B, 48B) durch die erste und die vierte Nockenfläche (82, 88) in die geöffnete Position getrieben werden, um gleichzeitig die erste Mündung (23) in Verbindung mit dem Einlass (21) und die vierte Mündung (26) in Verbindung mit dem Auslass (22) zu setzen, und in der zweiten Position des Antriebsglieds (80) das zweite und das dritte Öffnungs-/Schließelement (44B, 46B) durch die zweite und die dritte Nockenfläche (84, 86) in die geöffnete Position getrieben werden, um gleichzeitig die zweite Mündung (24) in Verbindung mit dem Einlass (21) und die dritte Mündung (25) in Verbindung mit dem Auslass (22) zu setzen,
**dadurch gekennzeichnet, dass** für jeden Ventilsitz (60C) und das entsprechende Öffnungs-/Schließelement (62) das Öffnungs-/Schließelement in einer Richtung orthogonal zu dem durch den Ventilsitz definierten Strömungsabschnitt bewegbar ist.

2. Vorrichtung nach Anspruch 1, wobei das Antriebsglied (80) in einer dritten Position zwischen der ersten und der zweiten Position positioniert werden kann, in der die Nockenflächen (82, 84, 86, 88) alle inaktiv sind und die Öffnungs-/Schließelemente (42B, 44B, 46B, 48B) alle in einer geschlossenen Position sind.

3. Vorrichtung nach Anspruch 1, wobei das Öffnungs-/Schließelement gegenüberliegende Flächen (62A, 62A') aufweist, die dazu ausgelegt sind, dem Druck des Arbeitsfluids auf der stromaufwärtigen Seite des Ventilsitzes ausgesetzt zu sein, wobei diese Flächen in Bezug zueinander so bemessen sind, dass das Öffnungs-/Schließelement aufgrund des auf diese Flächen wirkenden Drucks normalerweise in der geschlossenen Position gehalten wird, wenn keine Einwirkung durch das Antriebsglied erfolgt.

4. Vorrichtung nach einem der vorhergehenden Ansprüche, wobei die Nockenflächen (82, 84, 86, 88) ein Rampenprofil aufweisen.

5. Hydrauliksystem, umfassend:
- eine Einrichtung zum Zuführen eines Arbeitsfluids;
- eine Arbeitsmaschine, die für den Betrieb mit dem Arbeitsfluid ausgelegt ist und eine erste Kammer (100A), (100B) oder einen ersten Durchgang und eine zweite Kammer oder einen zweiten Durchgang umfasst, die so ausgelegt sind, dass sie selektiv und abwechselnd miteinander einen Strom des Arbeitsfluids aufnehmen oder zuführen; und
- eine Ventileinrichtung nach einem der vorhergehenden Ansprüche,
wobei der Einlass (21) der Ventileinrichtung (10) mit der Versorgungseinrichtung verbunden ist, und wobei die erste und die zweite Mündung (23, 24) mit der ersten bzw. zweiten Kammer (100A, 100B) verbunden sind und die dritte und die vierte Mündung (25 und 26) mit der ersten bzw. zweiten Kammer (100A, 100B) verbunden sind.

6. Hydrauliksystem nach Anspruch 5, wobei die Versorgungseinrichtung dazu ausgelegt ist, das Wasser aus einem natürlichen Gewässer zu entnehmen, um das Wasser als Arbeitsfluid zu verwenden.

7. System nach Anspruch 5 oder Anspruch 6, wobei der Auslass (22) der Einrichtung mit einem Abfluss in Verbindung gesetzt ist, der zum Ablassen des Arbeitsfluids aus dem System vorgesehen ist.

## Revendications

1. Dispositif de soupape pour distribuer un fluide de travail à une machine de fonctionnement d'un système hydraulique, ledit dispositif comprenant :
- un bloc de soupape (2) ayant une entrée (21) et au moins une première embouchure (23) et une deuxième embouchure (24) ;
- un premier siège de soupape (42A), définissant une voie de passage conçue pour mettre ladite première embouchure (23) en communication avec ladite entrée (21), et un premier élément d'ouverture/de fermeture (42B) qui ferme ledit premier siège de soupape (42A) ;
- un deuxième siège de soupape (44A), définissant une voie de passage conçue pour mettre ladite deuxième embouchure (24) en communication avec ladite entrée (21), et un deuxième élément d'ouverture/de fermeture (44B) qui ferme ledit deuxième siège de soupape (44A) ; et
- un organe d'entraînement (80) gouverné par un actionneur, mobile entre une première position et une deuxième position, où ledit organe d'entraînement a une première surface à came (82) et une deuxième surface à came (84), qui sont conçues pour qu'un premier organe de poussoir (42C), raccordé audit premier élément d'ouverture/de fermeture (42B), et un deuxième organe de poussoir (44C), raccordé audit deuxième élément d'ouverture/de fermeture (44B), entrent en prise avec celles-ci, respectivement
dans lequel lesdites première et deuxième surfaces à came (82, 84) sont prévues de manière telle que, dans ladite première position dudit organe d'entraînement (80), ledit premier élément d'ouverture/de fermeture (42B) soit entraîné dans la position ouverte par ladite première surface à came (82) par l'intermédiaire dudit premier organe de poussoir (42C) afin de mettre ladite première embouchure (23) en communication avec ladite entrée (21) et, dans ladite deuxième position, ledit deuxième élément d'ouverture/de fermeture (44B) soit entraîné dans la position ouverte par ladite deuxième surface à came (84) par l'intermédiaire dudit deuxième organe de poussoir (44C) afin de mettre ladite deuxième embouchure (24) en communication avec ladite entrée (21),
dans lequel ledit bloc de soupape (2) a :
- une sortie (22) et une troisième embouchure (25) et une quatrième embouchure (26) ;
- un troisième siège de soupape (46A), définissant une voie de passage conçue pour mettre ladite troisième embouchure (25) en communication avec ladite sortie (22), et un troisième élément d'ouverture/de fermeture (46B) qui ferme ledit troisième siège de soupape (46A) ; et
- un quatrième siège de soupape (48A), définissant une voie de passage conçue pour mettre ladite quatrième embouchure (26) en communication avec ladite sortie (22), et un quatrième élément d'ouverture/de fermeture (48B) qui ferme ledit quatrième siège de soupape (48A),
dans lequel ledit organe d'entraînement (80) a une troisième surface à came (86) et une quatrième surface à came (88), avec lesquelles entrent en prise, respectivement, un troisième organe de poussoir (46C), raccordé audit troisième élément d'ouverture/de fermeture (4 6B), et un quatrième organe de poussoir (48C), raccordé audit quatrième élément d'ouverture/de fermeture (48B) ;
dans lequel lesdites troisième et quatrième surfaces à came (86, 88) sont prévues de manière telle que, dans ladite première position dudit organe d'entraînement (80), ledit quatrième élément d'ouverture/de fermeture (48B) soit entraîné dans la position ouverte par ladite quatrième surface à came (88) par l'intermédiaire dudit quatrième organe de poussoir (48C) afin de mettre ladite quatrième embouchure (26) en communication avec ladite sortie (22), et, dans ladite deuxième position, ledit troisième élément d'ouverture/de fermeture (46B) soit entraîné dans la position ouverte par ladite troisième surface à came (86) par l'intermédiaire dudit troisième organe de poussoir (46C) afin de mettre ladite troisième embouchure (25) en communication avec ladite sortie (22),
dans lequel l'organe d'entraînement (80) est entraîné dans un mouvement de translation, par ledit actionneur (92), entre ladite première position et ladite deuxième position,
dans lequel lesdites première, deuxième, troisième, et quatrième surfaces à came (82, 84, 86, 88) sont positionnées sur l'organe d'entraînement (80) les unes par rapport aux autres de manière telle que, dans ladite première position dudit organe d'entraînement (80), lesdits premier et quatrième éléments d'ouverture/de fermeture (42B, 48B) soient entraînés dans la position ouverte par lesdites première et quatrième surfaces à came (82, 88) afin de mettre, simultanément, ladite première embouchure (23) en communication avec ladite entrée (21) et ladite quatrième embouchure (26) en communication avec ladite sortie (22), et, dans ladite deuxième position dudit organe d'entraînement (80), lesdits deuxième et troisième éléments d'ouverture/de fermeture (44B, 46B) soient entraînés dans la position ouverte par lesdites deuxième et troisième surfaces à came (84, 86) afin de mettre, simultanément, ladite deuxième embouchure (24) en communication avec ladite entrée (21) et ladite troisième embouchure (25) en communication avec ladite sortie (22),
**caractérisé en ce que**, pour chaque siège de soupape (60C) et l'élément d'ouverture/de fermeture correspondant (62), ledit élément d'ouverture/de fermeture est mobile dans une direction orthogonale à la section d'écoulement définie par ledit siège de soupape.

2. Dispositif selon la revendication 1, dans lequel ledit organe d'entraînement (80) peut être positionné dans une troisième position, intermédiaire entre lesdites première et deuxième positions, où lesdites surfaces à came (82, 84, 86 88) sont toutes inactives et lesdits éléments d'ouverture/de fermeture (42B, 44B, 46B, 48B) sont tous dans une position fermée.

3. Dispositif selon la revendication 1, dans lequel ledit élément d'ouverture/de fermeture a des surfaces opposées (62A, 62A'), conçues pour être soumises à la pression du fluide de travail sur le côté en amont du siège de soupape, qui sont dimensionnées l'une par rapport à l'autre de manière telle que, en conséquence de la pression agissant sur lesdites surfaces, ledit élément d'ouverture/de fermeture soit normalement maintenu dans la position fermée, en l'absence de toute action par ledit organe d'entraînement.

4. Dispositif selon l'une quelconque des revendications précédentes, dans lequel lesdites surfaces à came (82, 84, 86, 88) ont un profil de rampe.

5. Système hydraulique, comprenant :
un dispositif pour effectuer l'alimentation en un fluide de travail ;
une machine de fonctionnement conçue pour fonctionner avec ledit fluide de travail, qui comprend une première chambre (100A), ou première voie de passage, et une seconde chambre (100B), ou seconde voie de passage, qui sont conçues, sélectivement et de manière alternée l'une avec l'autre, pour recevoir, ou effectuer l'alimentation en, un écoulement dudit fluide de travail ; et
- un dispositif de soupape selon l'une quelconque des revendications précédentes,
dans lequel ladite entrée (21) dudit dispositif de soupape (10) est raccordée audit dispositif d'alimentation, et dans lequel lesdites première et deuxième embouchures (23, 24) sont raccordées auxdites première et seconde chambres (100A, 100B), respectivement, et lesdites troisième et quatrième embouchures (25 et 26) sont raccordées auxdites première et seconde chambres (100A, 100B), respectivement.

6. Système hydraulique selon la revendication 5, dans lequel ledit dispositif d'alimentation est conçu pour prendre l'eau à partir d'une étendue d'eau naturelle pour utilisation de ladite eau en tant que fluide de travail.

7. Système selon la revendication 5 ou la revendication 6, dans lequel ladite sortie (22) dudit dispositif est mise en communication avec une évacuation prévue pour évacuer ledit fluide de travail à partir dudit système.
